(19) Europäisches Patentamt
European Patent Office
Office européen des brevets

(11) **EP 4 062 769 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(51) Internationale Patentklassifikation (IPC):
**A23L 15/00** (2016.01)   **A23B 5/005** (2006.01)
**A23B 5/035** (2006.01)   **A23J 1/09** (2006.01)

(21) Anmeldenummer: **22164562.5**

(22) Anmeldetag: **25.03.2022**

(52) Gemeinsame Patentklassifikation (CPC):
**A23L 15/00; A23B 5/005; A23B 5/035; A23J 1/09**

(54) **VERFAHREN ZUR HERSTELLUNG VON EIKLARPULVER MIT HOHER GELFESTIGKEIT UND VERBESSERTEM GESCHMACK, EIKLARPULVER**

PROCESS FOR THE PRODUCTION OF EGG WHITE POWDER WITH HIGH GEL STRENGTH AND IMPROVED TASTE, EGG WHITE POWDER

PROCÉDÉ DE PRODUCTION DE POUDRE DE BLANC D'OEUF À HAUTE RÉSISTANCE DE GEL ET GOÛT AMÉLIORÉ, POUDRE DE BLANC D'OEUF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2021 DE 102021203055**

(43) Veröffentlichungstag der Anmeldung:
**28.09.2022 Patentblatt 2022/39**

(73) Patentinhaber: **OVOBEST Eiprodukte GmbH & Co. KG**
**49434 Neuenkirchen-Vörden (DE)**

(72) Erfinder:
• **Dr. Schneppe, Bernhard**
**49434 Neuenkirchen-Vörden (DE)**
• **Tönjes, Sinah**
**49434 Neuenkirchen-Vörden (DE)**
• **Dr. Rehkamp, Anne**
**49434 Neuenkirchen-Vörden (DE)**

(74) Vertreter: **Taruttis, Stefan Georg**
**TARUTTIS Patentanwaltskanzlei**
**Aegidientorplatz 2b**
**30159 Hannover (DE)**

(56) Entgegenhaltungen:
EP-A1- 3 571 935          WO-A1-2017/136119
DE-A1- 102014 206 351

• CHENG YUAN ET AL: "Effect of dry heating on egg white powder influencing water mobility and intermolecular interactions of its gels", JOURNAL OF THE SCIENCE OF FOOD AND AGRICULTURE, vol. 101, no. 2, 21 August 2020 (2020-08-21), GB, pages 433 - 440, XP055946335, ISSN: 0022-5142, Retrieved from the Internet <URL:https://onlinelibrary.wiley.com/doi/full-xml/10.1002/jsfa.10652> DOI: 10.1002/jsfa.10652
• BARON F ET AL: "Effect of dry heating on the microbiological quality, functional properties, and natural bacteriostatic ability of egg white after reconstitution", JOURNAL OF FOOD PROTECTION, INTERNATIONAL ASSOCIATION FOR FOOD PROTECTION, US, vol. 66, no. 5, 1 January 2003 (2003-01-01), pages 825 - 832, XP009169667, ISSN: 0362-028X

## Beschreibung

Die vorliegende Erfindung betrifft Eiklarpulver, das nach Rehydratisieren in Wasser und Denaturieren eine hohe Gelfestigkeit aufweist, und ein Verfahren zur Herstellung des Eiklarpulvers aus Eiklar von Vogeleiern, insbesondere aus Eiklar aus Hühnereiern. Der verbesserte Geschmack, auch als neutraler Geschmack zu bezeichnen, wird auf den geringen Salzgehalt des erfindungsgemäßen Eiklarpulvers zurückgeführt.

Das erfindungsgemäße Eiklarpulver, das mit dem erfindungsgemäßen Verfahren erhältlich ist, ist zur Verwendung als Zusatz für Lebensmittel geeignet und bildet nach Lösen in Wasser und Denaturieren in Lebensmittelmischungen ein Gel. Das mit dem Verfahren hergestellte Eiklarpulver ist für die Weiterverarbeitung in Lebensmitteln vorgesehen. Das Eiklarpulver zeichnet sich neben der hohen Gelfestigkeit des daraus durch Rehydratisieren und durch Erwärmen denaturierten hergestellten Gels insbesondere dadurch aus, dass es entsalzen bzw. demineralisiert ist und dadurch stark verbessert im Geschmack ist und dennoch besonders gute Funktionalitäten in der Weiterverarbeitung aufweist. Die Gelfestigkeit bezieht sich insbesondere auf die Gelstärke eines wässrigen Gels Weiter betrifft die Erfindung wässriges Gel, das durch Lösen, insbesondere vollständiges Lösen, des Eiklarpulvers in Wasser mit anschließender Erwärmung erhältlich ist, sowie ein Verfahren zur Herstellung des Gels durch Lösen des erfindungsgemäß hergestellten Eiklarpulvers. Das Eiklarpulver weist überdies ein gutes Bindevermögen für Wasser auf und eine gute Aufschlagfähigkeit. Die Kombination dieser Eigenschaften wird gegenwärtig auf die Löslichkeit und das Dispergiervermögen des mit dem erfindungsgemäßen Verfahren hergestellten Eiklarpulvers in Wasser zurückgeführt. Ein Vorteil des Eiklarpulvers ist, dass es keine Zusatzstoffe aufweist und z.B. aus Eiklarprotein, dem reduzierten Salzgehalt und Wassergehalt besteht.

## Stand der Technik

Egg Science and Technology, Hrsg. Stadelman et al., 1995, S. 180, beschreibt für flüssiges Eiklar (Wassergehalt 87,9%) einen nativen Chlorid-Gehalt von 174 mg/100 g.

Nach Analyse durch Titration von Chloridionen nach Mohr wird für Eiklarpulver mit natürlichem Salzgehalt ein Salzgehalt (NaCl) von ca. 3,4 % bestimmt.

Baron et al., Journal of Food Protection 825-832 (2003) hat konventionell hergestelltes Eiklarpulver für 15 Tage bei 67°C behandelt im Vergleich dazu für 15 Tage bei 75°C. Bei der höheren Temperatur sind die Gelstärke und die Aufschlagfähigkeit stärker verbessert als bei der niedrigeren Temperatur, während die Löslichkeit geringfügig abnimmt. Außerdem waren auch die bakteriostatischen Eigenschaften gegen Salmonellen bei der höheren Temperatur verbessert.

Die DE 10 2014 206 351 A1 beschreibt das Entsalzen von und optional Entzuckern von Eiklar, das pasteurisiert und optional getrocknet wird. Es wird ein weisses Erscheinungsbild des Eiproduktes erzeugt. Es werden Lebensmitteln auf Eiklarbasis hergestellt.

Egg Science and Biotechnology, Hrsg. Mine, 2008, S. 307-325, beschreibt im Zusammenhang mit der Trocknung von Ei, insbesondere durch Sprühtrocknen bei 121 bis 232 °C, dass zur Verringerung der Kosten Wasser durch Ultrafiltration oder reverse Osmose abgetrennt werden kann, ohne dass die Aufschlageigenschaften beeinträchtigt werden. Die Gelfestigkeit von Eiklar wurde erhöht, was auf die erhöhte Proteinkonzentration zurückgeführt wird. Für Eiklar wird 51,7°C für 1,5 min zur Inaktivierung von natürlicher Katalase beschrieben, mit dem anschließenden Zusatz von $H_2O_2$ mit Halten bei 51,7°C für 2 min, anschließendem Kühlen auf 7°C und Zusetzen von Katalase zur Entfernung von $H_2O_2$. Diese Behandlung soll Listerien inaktivieren, ohne das hitzeempfindliche Eiklarprotein zu zerstören. Nach dem Trocknen wird getrocknetes Eiklar bei 54,4°C für 7 bis 10 Tage inkubiert, um Salmonellen zu inaktivieren, wodurch auch die Aufschlageigenschaften und die Gelfestigkeit verbessert werden.

Die EP 3 571 935 A1 beschreibt Eiklarpulver, das durch eine erste Hitzebehandlung für 5 bis 45 Tage bei 60 bis 80°C und eine anschließende zweite Hitzebehandlung bei einer um zumindest 5 K höheren Temperatur bei 80 bis 100 °C für 5 bis 45 Tage eine erhöhte Gelfestigkeit aufweisen soll. Zur möglichen Entsalzung des Eiklars vor der Trocknung werden keine konkreten Angaben gemacht und kein Einfluss auf die Gelfestigkeit gemacht.

Die WO 2017/136119 A1 beschreibt, dass das Entfernen von Mineralien und Zucker aus Eiprotein, z.B. aus Eiklar, mittels Nano- oder Ultrafiltration zu einem Eipulver führt, das niedrige Gelfestigkeiten und geringe Schaumbildungseigenschaften hat und sich daher als Zusatz zu sauren Getränken eignet. Zusätzlich wird beschrieben, dass die Demineralisierung bzw. Entaschung zu reduzierter Löslichkeit und verringertem Dispergiervermögen des Eiklarpulvers führt, was z.B. durch eine Verkapselung mit Lecithin verbessert werden kann.

Auch in Vorversuchen zur vorliegenden Erfindung hat sich gezeigt, dass das Entfernen von Salz und Zucker aus flüssigem Eiklar durch anschließendes Trocknen zu einem Eiklarpulver führt, das nur schlecht löslich ist und entsprechend kaum Gelstärke ausbildet.

## Aufgabe der Erfindung

Die Aufgabe der Erfindung liegt darin, ein alternatives Verfahren zur Herstellung von Eiklarpulver und das entsprechend erhältliche Eiklarpulver bereitzustellen, das bevorzugt eine hohe Löslichkeit in Verbindung mit guten funktionellen Eigenschaften, insbesondere hoher Gelstärke und hoher Wasserbindung eines wässrigen erhitzten Gels und weiter bevorzugt eine hohe Aufschlagfähigkeit bei geringem Salzgehalt hat, der zu einem verbesserten Geschmack führt.

**Beschreibung der Erfindung**

Die Erfindung löst die Aufgabe mit den Merkmalen der Ansprüche und insbesondere mittels eines Verfahrens, das die Schritte

a) Bereitstellen von flüssigem, rohem Eiklar aus Vogeleiern durch Abtrennen von Eigelb vom Eiklar,

b) optional Einstellen des pH-Werts des flüssigen rohen Eiklars auf einen Wert zwischen 4 und 10, z.B. pH 4 bis 8,5, bis 8,0, oder bis pH 7,5, insbesondere pH 6,0 bis 7,0 oder pH 6,5 bis 7,0,

c) optional Pasteurisieren des flüssigen rohen Eiklars,

d) Abtrennen von Salz und Entzuckern des flüssigen Eiklars zur Herstellung entsalzten und entzuckerten flüssigen Eiklars bis auf einen maximalen Salzgehalt an NaCl von maximal 1.4 Gew.% an der Trockensubstanz, maximal 1,3 Gew.-%, maximal 1,2 Gew.-%, maximal 1,0 Gew.-%, maximal 0,8 Gew.-%, maximal 0,6 Gew.-%, bevorzugter maximal 0,4 Gew.-%, z.B. auf 0,3 bis 0,4 Gew.-% oder auf 0,3 bis 0,31 Gew.-% Salz, bevorzugt 1,4 bis 0,8 Gew.-%, 1,3 bis 0,9 Gew.-% oder 1,3 bis 1,0 Gew.-% Salz bezogen auf die Trockenmasse, optional und bevorzugt mit Abtrennen von Wasser aus dem Eiklar bis auf einen Proteingehalt von zumindest 12 Gew.-%, bevorzugter 18 bis 23 Gew.-%,

e) optional Einstellen des pH-Werts des entsalzten und entzuckerten flüssigen Eiklars, z.B. auf pH 4 bis 8, bevorzugt pH 5 bis 7, bevorzugter pH 6,

f) Sprühtrocknen des entsalzten und entzuckerten flüssigen Eiklars zur Herstellung von sprühgetrocknetem Eiklarpulvers, das einen Salzgehalt an NaCl von maximal 1,4 Gew.-%, maximal 1,3 Gew.-%, maximal 1,2 Gew.-%, maximal 1,0 Gew.-%, maximal 0,8 Gew.-%, maximal 0,6 Gew.-% Salz bezogen auf die Trockenmasse aufweist, bevorzugt 1,4 bis 0,8 Gew.-%, 1,3 bis 0,9 Gew.-% oder 1,3 bis 1,0 Gew.-% Salz bezogen auf die Trockenmasse,

g) Wärmebehandeln des sprühgetrockneten Eiklarpulvers bei einer Temperatur von 77°C bis 90°C für 1 bis 3 Wochen erfolgt in Kontakt mit Luft mit weiterem Trocknen des Eiklarpulvers, wobei ein Wassergehalt von maximal 6 Gew.-% erreicht wird, z.B. bis zu einem Wassergehalt von maximal 4,6 Gew.-%, aufweist oder daraus besteht, sowie durch das mit dem Verfahren erhältliche Eiklarpulver. Das Wärmebehandeln des sprühgetrockneten Eiklarpulvers bei einer Temperatur von 77,5 bis 90°C für 2-3 Wochen führt zur Herstellung von in Wasser löslichem Eiklarpulver, dessen Löslichkeit bevorzugt zumindest 80 %, bevorzugter zumindest 90 %, bevorzugter 100 % beträgt, und das ein durch Rehydratisieren und Erwärmen hergestelltes Gel hoher Gelfestigkeit und weiter bevorzugt hoher Wasserbindung bildet.

Es hat sich gezeigt, dass das Abtrennen von Salz aus flüssigem Eiklar mit anschließendem Sprühtrocknen zu sprühgetrocknetem Eiklarpulver führt, wobei die anschließende Wärmebehandlung bei 60 bis 70°C für 10 Tage, wie dies für die mikrobiologische Sicherheit ausreichend und üblich ist, in dampfdurchlässigen Behältern oder offen in Luft zu einer stark verringerten Löslichkeit des Produkts führt. Wenn vor dem Sprühtrocknen der Salzgehalt des Eiklars nicht verringert wird, verschlechtert sich die Löslichkeit durch diese Wärmebehandlung in geringerem Ausmaß. In Vorversuchen hat sich gezeigt, dass das Abtrennen von Salz aus Eiklar auf maximal 2,6 Gew.-%, insbesondere auf 1,0 bis 1,4 oder bis 1,3 Gew.-% NaCl, jeweils bezogen auf die Trockenmasse, vor dem Sprühtrocknen und vor dieser Wärmebehandlung bei 60 bis 70°C für 10 Tage die Löslichkeit stark verringert.

Ein Vorteil der Erfindung liegt darin, dass das mit dem Verfahren erhältliche Eiklarpulver nach dem anschließenden Lösen in Wasser einen verbesserten, insbesondere neutralen Geschmack hat, der auf den geringen Salzgehalt zurückgeführt wird. Die Wärmebehandlung erfolgt zumindest bei 77°C, z.B. bis 90°C, wobei die Dauer 3 Wochen bis 1 Woche beträgt, und die Dauer bei höherer Temperatur kürzer sein kann, z.B. 80 bis 90°C 1 bis 3 Wochen, bevorzugt 1 bis 2 Wochen. Durch die Wärmebehandlung, bevorzugt bei höherer Temperatur, insbesondere bei zumindest 77°C, bevorzugt zumindest 80°C, z.B. bis maximal 90°C, weist ein durch Lösen und Erwärmen des entsalzten bzw. demineralisierten Eiklarpulvers hergestelltes Gel dennoch eine hohe Gelstärke und hohe Wasserbindung auf, die als geringer Wasseraustritt bestimmbar ist.

Das Verfahren hat den Vorteil, dass das dadurch erhaltene Eiklarpulver lagerstabil ist, gute funktionelle Eigenschaften aufweist und gegenüber Eiklarpulver mit natürlichem Salzgehalt einen neutraleren Geschmack aufweist, insbesondere einen neutraleren Geschmack eines aus dem Eiklarpulver hergestellten Gels. Der neutralere Geschmack entspricht einem geringeren Salz- und Eigeschmack. Entsprechend betrifft die Erfindung auch Verfahren zur Herstellung von Lebensmitteln durch Einmischen des erfindungsgemäß hergestellten Eiklarpulvers, bevorzugt bis zum Lösen, insbesondere vollständigen Lösen des Eiklarpulvers im Wasseranteil einer Mischung mit anschließendem Erhitzen der Mischung auf zumindest eine Temperatur, bei der das gelöste Eiklar denaturiert bzw. ein Gel bildet.

Das Verfahren hat den Vorteil, dass es für die Anwendung im technischen Maßstab geeignet ist, insbesondere dadurch, dass das sprühgetrocknete Eiklarpulver der Wärmebehandlung in Kontakt mit Luft und bei Luftaustausch unterzogen werden kann, d.h. ohne Einschluss des sprühgetrockneten Eiklarpulvers in dampfdichte und/oder luftdichte Behälter. Für das Wärmebehandeln in Schritt g) kann das sprühgetrocknete Eiklarpulver in loser Schüttung, in dampfdurchlässigen und/oder luftdurchlässigen Behältern vorliegen. Behälter können formstabil sein oder verformbar, z.B. Tüten oder Säcke. Während der Wärmebehandlung kann das sprühgetrocknete Eiklarpulver umgeschichtet werden oder, insbesondere bei Wärmebehandlung von in Behältern abgepacktem Eiklarpulver, unbewegt liegen. Während der Wärmebehandlung kann die Luft, die mit dem Eiklarpulver in Kontakt steht, entlang des Eiklarpulvers bewegt werden oder ohne aktive Umwälzung verbleiben. Dabei kann bevorzugt Wasserdampf aus der Luft abgetrennt werden. Bevorzugt wird Eiklarpulver nach dem Sprühtrocknen in Behälter abgefüllt und in den Behältern der Wärmebehandlung ausgesetzt. Optional wird Eiklarpulver im Verfahren erst im Anschluß an das Wärmebehandeln des sprühgetrockneten Eiklarpulvers in Kontakt mit Luft in Schritt g) in luftdichte und/oder wasserdampfdichte Behälter gefüllt.

Die Vogeleier, aus denen das rohe flüssige Eiklar abgetrennt wird, sind bevorzugt Eier von Hühnern (Gallus domesticus), und das Abtrennen in a) erfolgt durch Aufbrechen der Schale und Trennen des Eigelbs vom Eiklar.

Der pH-Wert des flüssigen rohen Eiklars wird bevorzugt auf einen Wert von 4 bis 10, z.B. auf pH 6,0 bis 7,5 eingestellt, bevorzugt durch Zugabe von lebensmittelgeeigneter Säure bzw. Lauge, z.B. in Schritt b) und/oder Schritt e).

Das optionale Pasteurisieren in Schritt c) erfolgt bevorzugt durch Erwärmen auf 53°C bis 60°C für 250 s bis 450 s, unter Bewegung, insbesondere durch Durchströmen eines Wärmeübertragers.

Als Alternative zum Pasteurisieren durch Erwärmung kann das Pasteurisieren durch Hochdruckbehandlung erfolgen, z.B. durch Beaufschlagen des Eiklars mit zumindest 200 bar, z.B. bis 500 bar oder bis 400 bar. Das Pasteurisieren durch diese Hochdruckbehandlung erfolgt unter Bewegung des Eiklars, z.B. durch Rühren in einem Behälter oder Pumpen durch eine Leitung, vorzugsweise bei Temperaturen des Eiklars vor der Hochdruckbehandlung von unterhalb 25 °C, bevorzugter unterhalb 20 °C. Die Hochdruckbehandlung erfolgt bevorzugt für 2 min, für 60 s, für 45 s, bevorzugter für 30 s oder für 20 s. Bevorzugt wird das Eiklar vor der Hochdruckbehandlung auf max. 25 °C, bevorzugter max. 20 °C temperiert. Auch während dieser Hochdruckbehandlung ist die Bewegung bevorzugt eine turbulente Strömung. Alternativ ist auch das Hochspannungsimpulsverfahren (pulsed electric fields) einsetzbar.

Das Abtrennen von Salz und Wasser in d) kann durch Membrantrennverfahren erfolgen, z.B. Ultrafiltration, die bevorzugt als Diafiltration durchgeführt wird. Bevorzugt erfolgt das Abtrennen von Salz und Wasser aus flüssigem Eiklar mittels

einer ersten Ultrafiltration mit einer Membran, die eine Ausschlussgröße von 5,0 kDa aufweist,
Zusetzen von Wasser zum Retentat und
einer zweiten Ultrafiltration mit einer Membran, die eine Ausschlussgröße von 5,0 kDa aufweist,
insbesondere bis zum Erreichen eines Salzgehalts, bestimmt als NaCl nach Mohr, von 1,4 bis 0,8 Gew.-%, von 1,3 bis 0,8 Gew.-%, bevorzugt 1,4 bis 1,0 Gew.-% oder 1,3 bis 1,0 Gew.-%, z.B. 1,2 bis 1,0 Gew.-%, jeweils bezogen auf die Trockenmasse, und weiter bevorzugt bis zum Erreichen eines Proteingehalts von 20 bis 25 Gew.-% oder bis 24 Gew.-%.

Im Anschluß an das Abtrennen von Salz und Wasser kann das Eiklar getrocknet werden, z.B. durch Sprühtrocknung.

Für die Zwecke der Erfindung ist der Salzgehalt als Gehalt an NaCl bestimmt. Diese Methode bestimmt den Chloridgehalt durch Titration nach Mohr (§64 LFGB L 05.02-1). Dazu wird 3 g Eiklarprobe mit destilliertem Wasser auf 100 mL verdünnt, mit 5 mL 0,25 M

Kaliumchromatlösung in Wasser versetzt und mit 0,1 M wässriger Silbernitratlösung bis zum hellrosa Umschlagpunkt titriert und mit folgender Formel berechnet:

$$Salzgehalt\ [Gew.-\%] = \frac{Vol.\ Silbernitrat\text{lösung}\ [mL]\,x\,0{,}58443}{Probenmasse\ [g]}$$

Das Entzuckern in Schritt d) kann vor, während oder nach dem Abtrennen von Salz und Wasser erfolgen, z.B. während des Abtrennens von Salz und Wasser mittels Ultrafiltration. Die Entzuckerung kann durch gängige Verfahren wie die Zugabe von Glucoseoxidase und Sauerstoff und/oder Ozon erfolgen, oder durch Zugabe von Milchsäurebakterien, z.B. Lactobacillus plantarum und/oder Lactobacillus cremoris und/oder Hefe, z.B. Saccharomyces cerevisiae, und Fermentieren, z.B. bei 30 bis 35 °C, bevorzugt bis keine Glukose im Eiklar enthalten ist. Die Entzuckerung erhöht die Haltbarkeit des Lebensmittels und minimiert die Maillard-Reaktion während der nachfolgenden Trocknung und Wärmebehandlung. Das Sprühtrocknen erfolgt bevorzugt bei 121-232 °C.

Das Sprühtrocknen kann z.B. bis auf einen Wassergehalt von maximal 10 Gew.-% erfolgen, bevorzugt auf maximal 8,0 Gew.-%, maximal 7,5 Gew.-%, maximal 7,0 Gew.-% bevorzugter auf maximal 6,5 Gew.-%, maximal 6 Gew.-% erfolgen, z.B. zumindest 1 oder zumindest 2 oder zumindest 3 oder zumindest 4 Gew.-% Wasser, bevorzugter auf maximal 5,5 Gew.-%, maximal 5,0 Gew.-%, maximal 4,5 Gew.-%, maximal 4,0 Gew.-%, maximal 3,5 Gew.-%, maximal 3,0 Gew.-%, maximal 2,5 Gew.-%, maximal 2,0 Gew.-%, maximal 1,5 Gew.-%, maximal 1,0 oder maximal 0,5 Gew.-% Wassergehalt.

Das Wärmebehandeln erfolgt z.B. bis zum Erreichen eines Wassergehalts von maximal 4,3 Gew.-%, bevorzugter maximal 4,1 Gew.-%, maximal 3,9 Gew.-%, maximal 3,7 Gew.-%, maximal 3,5 Gew.-%, maximal 3,3 Gew.-%, maximal 3,1 Gew.-%, maximal 2,9 Gew.-%, maximal 2,7 Gew.-%, maximal 2,5 Gew.-%, maximal 2,3 Gew.-%, maximal 2,1 Gew.-%, maximal 1,9 Gew.-%, maximal 1,7 Gew.-%, maximal 1,5 Gew.-%, maximal 1,3 oder maximal 1,1 Gew.-%, bis maximal 1,0 Gew.-%, maximal 0,8 Gew.-%, maximal 0,6 Gew.-%, maximal 0,4 Gew.-% oder maximal 0,2 Gew.-%, z.B. bis 0,2 Gew.-%.

Für die Zwecke der Erfindung ist der Salzgehalt als Gehalt an NaCl bestimmt, insbesondere als Gew.-% der Trockenmasse des Eiklarpulvers.

Das mit dem Verfahren erhältliche Eiklarpulver hat nach Sprühtrocknung und Wärmebehandlung bezogen auf die Trockenmasse einen Salzgehalt an NaCl von maximal 1,4 Gew.-%, bevorzugter maximal 1,3 Gew.-%, bevorzugter maximal 1,2 Gew.-%, bevorzugter maximal 1, 1 Gew.-%, bevorzugter maximal 1,0 Gew.-%, maximal 0,8 Gew.-%, maximal 0,6 Gew.-%, maximal 0,4 Gew.-% oder maximal 0,3 Gew.-%, weiter bevorzugt einen Wassergehalt von maximal 4,3 Gew.-%, z.B. bis 0,2 Gew.-%. Bevorzugt hat das mit dem Verfahren erhältliche Eiklarpulver nach Sprühtrocknung und Wärmebehandlung einen Salzgehalt von 1,4 bis 0,9 Gew.-%, bevorzugter 1,3 bis 1,0 Gew.-% oder 1,2 bis 1,0 Gew.-%.

Das Verfahren kann die Schritte aufweisen, das nach dem Wärmebehandeln von Schritt g) erhaltene Eiklarpulver in Wasser, das Bestandteil einer Mischung für Lebensmittel sein kann, zu lösen und anschließend zu erwärmen, um ein Gel zu bilden, das ggf. das Wasser in der Mischung für Lebensmittel umfasst. Das Erwärmen erfolgt auf eine Temperatur, bei der das Protein des Eiklarpulvers denaturiert, z.B. auf 58 bis 100 °C.

Generell kann das mit dem Verfahren hergestellte Eiklarpulver in salzfreiem Wasser gelöst und durch Erwärmen denaturiert werden, um ein Gel hoher Gelstärke auszubilden. Optional wird das mit dem Verfahren hergestellte Eiklarpulver in Wasser mit zumindest 1 Gew.-% Salz (NaCl), bevorzugt zumindest 2 Gew.-% Salz, z.B. jeweils bis 5 oder bis 4 oder bis 3 Gew.-% Salz, gelöst und durch Erwärmen denaturiert, um ein Gel auszubilden, das eine noch höhere Gelstärke aufweist. Denn es hat sich gezeigt, dass das erfindungsgemäß hergestellte Eiklarpulver auch in Wasser, das Salz enthält, gut löslich ist und Gel mit einer Gelstärke ausbildet, die höher sind, als mit demselben Eiklarpulver in salzfreiem Wasser. Dabei weist generell salzfreies Wasser oder Wasser ohne NaCl z.B. den Salzgehalt, insbesondere bestimmt als NaCl, von Trinkwasser gemäß deutscher Trinkwasserverordnung, insbesondere NaCl berechnet auf Basis von maximal 250 mg/l Chlorid, entsprechend 412 mg/l gleich 0,04 Gew.-% NaCl.

Das Wärmebehandeln des sprühgetrockneten Eiklarpulvers in Schritt g) erfolgt bei 77,5°C für zumindest 2 Wochen oder bis 3 Wochen, bei 80°C bis 90°C für zumindest 1 Woche, z.B. für 1, 2 oder 3 Wochen. Bevorzugt erfolgt das Wärmebehandeln in Schritt g) bei zumindest 77,5°C für 3 Wochen und für höhere Temperaturen für zumindest 1 Woche, z.B für 1 bis 3 Wochen oder für 2 bis 3 Wochen. Für Temperaturen in Schritt g) von zumindest 80°C erfolgt die Wärmebehandlung bevorzugt für zumindest 1 Woche, z.B. für 1 bis 3 Wochen, z.B. 1, 2 oder 3 Wochen.

Die Löslichkeit wurde wie folgt bestimmt: 15 g Eiklarpulver werden in einem Behälter mit 105 mL Wasser für 1 min gemischt, z.B. in einen Homogenisier-Beutel (Stomacher), anschließend in einen Glasmesszylinder gefüllt und 30 min stehengelassen, die Volumenanteile ungelöster Bestandteile, die sich am Boden und optional an der Oberfläche der Mischung ansammeln, werden bestimmt, addiert und als prozentualer Anteil berechnet. Das durch das Verfahren nach dem Wärmebehandeln von Schritt g) erhaltene Eiklarpulver kann in Wasser, das Bestandteil einer Mischung für Lebensmittel sein kann, gelöst und anschließend erwärmt werden, um ein Gel zu bilden. Das Eiklarpulver hat den Vorteil, nach Lösen in Wasser und anschließendem Erwärmen auf eine Temperatur, bei der in Wasser gelöstes Eiklar denaturiert, ein glattes, d.h. homogenes, und festes Gel zu bilden, das eine hohe Wasserbindung und hohe Gelfestigkeit aufweist.

Die Gelfestigkeit wird wie folgt bestimmt: 30 g Eiklarpulver werden mit 170 g bidest. Wasser gemischt und 2 h stehengelassen, anschließend ohne eingeschlossene Luftblasen für 60 min auf 75 °C erhitzt, bevorzugt im Wasserbad. Die Mischung des Eiklarpulvers in Wasser wird bevorzugt ohne Einschluss von Luftblasen in einen Plastikschlauch (Krehalon Seam DX390 Clear, PVDC, Durchmesser 38.2 mm) gefüllt und darin erhitzt. Anschließend wird über Nacht (12h) bei 2 bis 7 °C gekühlt und danach an der Luft auf Raumtemperatur erwärmen gelassen. Aus dem Gel werden 15 mm dicke Zylinder, Durchmesser 38,2 mm, geschnitten.

Die Messung erfolgt mit einem Texture Analyzer (ZwickiLine Z 0.5 TN mit 200 N Kraftaufnehmer und der Software testXpert III (Hersteller: Zwick Roell, Ulm, Deutschland), Messstempel: globular, 8 mm Durchmesser, Stirnfläche 1,005 $cm^2$, Geschwindigkeit des Messstempels gegen das Gel 1 mm/s. Jede Probe wird einmal gemessen, wobei eine Kompression der Probe von 90 % (13,5 mm) erreicht wird. Die Gelstärke wird als Bruchkraft in Bezug zur Stirnfläche des Messstempels angegeben (in $g/cm^2$), wobei vorliegend ein Mittelwert aus zumindest 5 Messungen angegeben ist.

Die Gelstärke eines aus dem erfindungsgemäß hergestellten Eiklarpulvers hat bevorzugt eine Gelfestigkeit von zumindest 490 g/cm$^2$, insbesondere zumindest 600 g/cm$^2$, bevorzugter mindestens 800 g/cm$^2$.

Die Wasserbindung wurde durch folgendes Verfahren bestimmt. Die Wasserbindung wird als Wasserabgabe (%) angegeben: Lösen von 20 g Eiklarpulver in 120 g Wasser, schaumfrei für 40 min auf 80 °C erhitzt, bevorzugt nach Abfüllen in einen Plastikschlauch (Krehalon Seam DX390 Clear, PVDC, Durchmesser 38,2 mm), bei 5 °C für 24 h lagern, dann zumindest 3 h bei Raumtemperatur lagern, um das Gel auf Raumtemperatur zu bringen, Schneiden in Zylinder (38,2 mm Durchmesser, 3 cm Dicke), Bestimmen des Gewichts der Zylinder, mit einer ebenen Schnittfläche auf Filterpapier legen (5 Lagen, Durchmesser 110 mm), nach 1 h Bestimmen des Gewichts der Zylinder und Berechnen der Wasserabgabe:

$$\text{Wasserabgabe } [\%] = \frac{\text{Gewicht vorher} - \text{Gewicht nach 1 h Liegen auf Filterpapier}}{\text{Gewicht vorher}} * 100$$

Ein aus dem erfindungsgemäß hergestellten Eiklarpulver hergestelltes Gel mit einem Gehalt von 20 g Eiklarpulver in 120 g Wasser hat bevorzugt eine Wasserabgabe von maximal 6 Gew.-%, bevorzugt maximal 4,5 Gew.-%, bevorzugter max. 1 Gew.%.

Das Verfahren hat den Vorteil, dass es für die Anwendung für den großtechnischen Maßstab geeignet ist. Für das Wärmebehandeln in Schritt g) kann das sprühgetrocknete Eiklarpulver in variablen Behältern erfolgen, die optional dampfdurchlässig und/oder luftdurchlässig sein können. Die Behälter können formstabil sein oder verformbar, z.B. Tüten oder Säcke mit variablen Füllgewichten von 1 bis 25 kg. Die Behandlung erfolgt bevorzugt in beheizbaren Räumen. Während der Wärmebehandlung können die Behälter einzeln oder auf Paletten gestapelt sein und die Luft, die mit dem Eiklarpulver in Kontakt steht, entlang des Behälters des Eiklarpulvers bewegt werden oder aktive Umwälzung verbleiben.

Beispiel 1: Herstellung von erfindungsgemäßem Eiklarpulver mit hoher Gelstärke:

Aus Hühnereiern durch maschinelles Öffnen und Abtrennen des Eigelbs erzeugtes rohes Eiklar wurde durch Zugabe von Säure auf pH 7,0 bis 7,5 eingestellt und optional anschließend durch Durchströmen eines Wärmeübertragers pasteurisiert. Wasser und Salz wurden durch ein Membrantrennverfahren auf einen Restgehalt Salz, bestimmt durch Titration von Chloridionen nach Mohr und berechnet als NaCl, von 0,2 bis 0,4 Gew.-% vom flüssigen Eiklar abgetrennt, bevorzugt bis zum Erreichen eines Proteingehalts von 24 Gew.-% des flüssigen Eiklars. Dabei wurde Salz durch eine erste kontinuierliche Ultrafiltration bei einer Flussrate von Eiklar von 2 m$^3$/h mit einer Membran einer Ausschlussgröße von 5,0 kDa (spiralförmige Polyethersulfonmembran auf Polypropylenträger, erhältlich von Alfa Laval), anschließender kontinuierlicher Zugabe 1m$^3$/h salzfreiem Wasser und einer zweiten kontinuierlichen Ultrafiltration mit der gleichen Membran bei einer Flussrate von Eiklar von 2 m$^3$/h abgetrennt. Es wurde ein Salzgehalt von 1,2 bis 1,3 Gew.-% , berechnet als NaCl nach Titration nach Mohr, bezogen auf die Trockenmasse erreicht.

Zum Entzuckern wurden Milchsäurebakterien, z.B. Lactobacillus plantarum und/oder Lactobacillus cremoris und/oder Hefe, z.B. Saccharomyces cerevisiae, zugesetzt und fermentiert, z.B. bei 30 bis 35 °C, bevorzugt bis keine Glukose im Eiklar enthalten ist und optional nach Inkubation durch Zentrifugieren abgetrennt, oder es wurden Glucoseoxidase und Sauerstoff und/oder Ozon zugesetzt. In dem so hergestellten entsalzten und entzuckerten flüssigen Eiklar wurde der pH-Wert auf 6 eingestellt. Das Sprühtrocknen erfolgte bei 121 bis 232 °C bis auf einen Restwassergehalt von ca. 5,7 Gew.-% zur Herstellung sprühgetrockneten Eiklarpulvers.

Das sprühgetrocknete Eiklarpulver wurde zu je 1 kg in wasserdampfdurchlässigen Säcken in einem Karton bei unterschiedlichen Temperaturen im Bereich für 1 bis 3 Wochen wärmebehandelt, um das erfindungsgemäße Eiklarpulver herzustellen. Die Tabelle zeigt die Temperaturen der Wärmebehandlung und die nach unterschiedlichen Behandlungsdauern von 1 Woche (W1), 2 Wochen (W2) oder 3 Wochen (W3) gemessenen Wassergehalte (Gew.-%), die Gelstärke und die Löslichkeit in Wasser.

| Wärmebehandlung | Wassergehalt [%] | | | Gelstärke [g/cm$^2$] | | | Löslichkeit [%] | | |
|---|---|---|---|---|---|---|---|---|---|
| | W1 | W2 | W3 | W1 | W2 | W3 | W1 | W2 | W3 |
| 60°C | 4,7 | 3,9 | 3,2 | n.m. | n.m. | n.m. | 60 | 70 | 70 |
| 70°C | 4,6 | 3,5 | 2,4 | n.m. | 500 | 512 | 60 | 70 | 80 |
| 75°C | 4,3 | 2,6 | 1,9 | n.m. | 490 | 535 | 70 | 70 | 80 |
| 77,5°C | 2,9 | 2,3 | 1,5 | 416 | 617 | 775 | 65 | 97 | 100 |
| 80°C | 4,1 | 1,4 | 1,5 | 494 | 626 | 781 | 100 | 100 | 100 |

(fortgesetzt)

| Wärmebehandlung | Wassergehalt [%] | | | Gelstärke [g/cm$^2$] | | | Löslichkeit [%] | | |
|---|---|---|---|---|---|---|---|---|---|
| | W1 | W2 | W3 | W1 | W2 | W3 | W1 | W2 | W3 |
| 82,5°C | 2,4 | 1,8 | 0,8 | 588 | 849 | 970 | 100 | 100 | 100 |
| 85°C | 2,5 | 1,6 | 1 | 614 | 920 | 1100 | 100 | 100 | 100 |
| 90°C | 2 | 1,3 | 0,2 | 798 | 981 | 472 | 100 | 100 | n.m. |
| n.m. = nicht messbar weil zu gering, W= Woche | | | | | | | | | |

Die Ergebnisse zeigen, dass Eiklarpulver mit niedrigem Salzgehalt nach Sprühtrocknen und einer Wärmebehandlung bei 60 bis 75°C für 1 bis 3 Wochen nur eine geringe Löslichkeit aufweist. Der Salzgehalt liegt vor der Wärmebehandlung bei ca. 1,3 Gew.-%. Der Wassergehalt des Eiklarpulvers sinkt mit zunehmender Dauer und Temperatur der Wärmebehandlung. Überraschender Weise zeigt Eiklarpulver, das bei zumindest 77 °C für 3 Wochen oder bei höherer Temperatur für 1 bis 3 Wochen wärmebehandelt wurde, eine Löslichkeit von 100 % und signifikant höhere Gelstärken. Bei einer Wärmebehandlung bei 60 bis 70 °C wird eine höhere Löslichkeit und Gelstärke erst nach einer Dauer der Behandlung von 4 bis 5 Wochen erreicht.

Die Wasserbindung konnte ebenfalls signifikant gesteigert werden. Bei einer Behandlung von 60°C für 1-3 Wochen beträgt die Wasserabgabe mehr als 15%, während sie bei einer Behandlung von zumindest 77 °C für 3 Wochen bereits niedriger als 4% ist und bei einer Behandlung mit höheren Temperaturen für 1 bis 3 Wochen bis zu maximal 2,5% oder darunter beträgt.

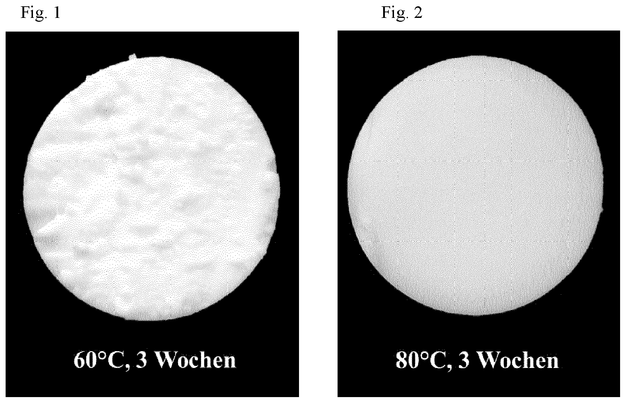

Die Figur 1 zeigt ein Foto der Schnittfläche eines Gels, das aus dem Eiklarpulver hergestellt wurde, das bei 60 °C für 3 Wochen wärmebehandelt wurde. Die Schnittfläche zeigt eine unregelmäßige Oberfläche, das Gel war wässrig und bröselig.

Die Figur 2 zeigt ein Foto der Schnittfläche eines Gels, das aus dem Eiklarpulver hergestellt wurde, das bei 80 °C für 3 Wochen wärmebehandelt wurde. Die Schnittfläche zeigt eine glatte Oberfläche, das Gel war fest und homogen.

Es wurde festgestellt, dass bei der Herstellung des Gels mit bidest. Wasser, dem NaCl zu einem Gehalt von 2 Gew. % zugesetzt waren, noch höhere Gelfestigkeiten erreicht wurden, als bei Gel, das mit bidest. Wasser hergestellt wurde.

Beispiel 2: Herstellung von erfindungsgemäßem Eiklarpulver mit hoher Gelstärke und Aufschlagfähigkeit

Die ersten Schritte der Herstellung des Eiklarpulvers erfolgte wie in Beispiel 1 dargelegt für das Öffnen der Eier und das Trennen des Eigelbs vom Eiklar, die Einstellung des pH-Werts, Pasteurisation, sowie das Entsalzen, Entzuckern und Sprühtrocknen.

Vorliegend wurde das sprühgetrocknete Eiklar zu je 25 kg in einzelnen Kartons abgefüllt und diese wurden zu je 20 Stück auf eine Palette gestapelt und in einem Heißraum bei 83°C für insgesamt 3 Wochen behandelt.

Die Löslichkeit wurde von 60% vor der Wärmebehandlung auf 100% gesteigert, wobei sich auch eine hohe Gelstärke von 840 g/cm$^2$ entwickelte. Zusätzlich wurde festgestellt, dass eine erhöhte Aufschlagfähigkeit mit einem Schaumvolumen von 3340 mL erreicht wurde, das wie folgt gemessen wurde: 25 g Eiweißpulver werden unter Rühren in 175 g Leitungswasser gelöst und auf 20°C temperiert. Die Lösung wird mittels eines Mischers (Hobart N50) für 2 min auf Geschwindigkeitsstufe 3 aufschlagen und das Volumen des Schaums bestimmt.

Die Rückverflüssigung dieses Schaums betrug nach 5 min 0% und nach einer Stunde 0,27%. Als Indikator für die Schaumstabilität wurde ein Schaum mit 15 g Eiweißpulver und 150 g Wasser hergestellt, auf dem ein 90 g Gewicht (Durchmesser ca. 6 cm) mittig auf dem Schaum platziert. Dieses Gewicht war nach unmittelbar nach dem Auflegen nur geringer als 1 cm eingesunken.

Das erfindungsgemäße Eiklarpulver kann daher in Lebensmittel eingemischt werden, die erhöhte Verschäumungseigenschaften an das Pulver voraussetzten, ohne dabei sensorische Einbußen aufgrund von enthaltenem NaCl in Kauf nehmen zu müssen. In solchen Lebensmitteln wird das Eiklarpulver in Wasser gelöst und anschließend aufgeschlagen.

Beispiel 3: Einfluß des Messverfahrens für die Gelfestigkeit

Für Vergleichszwecke wurde die Messung der Gelstärke folgendermaßen in Entsprechung zum Messverfahren der EP 3 571 935 A1 durchgeführt:
Auflösen von 1 Gew.-Teil Eiklarpulver plus 7 Gew.-Teile Wasser mit 2 Gew.-% NaCl, Wärmebehandlung 80°C für 40 min, Kühlen auf 20°C, Schneiden in zylindrische Form von 3cm Dicke, bei 20°C mit kugelförmigem Stempel, 8 mm Durchmesser, auf das Gel drücken (Vorschub 1 mm/s), Kraft in Gramm messen. Für Eiklarpulver, das einen Gehalt an NaCl, berechnet nach Titration gemäß Mohr, von 1,3 Gew.-% in Trockenmasse aufwies, wurde nach einer Wärmebehandlung von 28 Tagen bei 74°C plus 14 Tage bei 84°C hier eine Vergleichs-Gelfestigkeit von 807 g bestimmt, nach einer Wärmebehandlung von 28 Tagen bei 74°C plus 21 Tage bei 84°C hier eine Vergleichs-Gelfestigkeit von 876 g, die Löslichkeit betrug 100%.

Bei Messung der Gelfestigkeit nach Beispiel 1, wie sie für die vorliegende Erfindung generell verwendet wurde, wurde für dieselbe Charge Eiklarpulver, Wärmebehandlung von 28 Tagen bei 74°C plus 14 Tage bei 84 °C, eine Gelfestigkeit von 1041 g/cm² bestimmt, nach Wärmebehandlung von 28 Tagen bei 74°C plus 21 Tage bei 84 °C eine Gelfestigkeit von 1139 g/cm², die Löslichkeit betrug 100%.

Bei einer Wärmebehandlung von Eiklarpulver derselben Charge für 20 Tage bei 70°C und unmittelbar anschließend 10 Tage bei 85 °C wurde mit dem Messverfahren der EP 3 571 935 A1 eine Vergleichs-Gelfestigkeit von 662 g bestimmt (Löslichkeit 100%), bei Messung der Gelfestigkeit nach Beispiel 1 wurde eine Gelfestigkeit von 824 g/cm² bestimmt (Löslichkeit 100%).

Bei einer Wärmebehandlung von Eiklarpulver derselben Charge für 8 Tage bei 63°C und unmittelbar anschließend 21 Tage bei 84 °C wurde mit dem Messverfahren der EP 3 571 935 A1 eine Vergleichs-Gelfestigkeit von 682 g (Gelfestigkeit nach Beispiel 1 gemessen 833 g/cm²) bestimmt,

nach Wärmebehandlung für 8 Tage bei 63°C und unmittelbar anschließend 28 Tage bei 84 °C wurde mit dem Messverfahren der EP 3 571 935 A1 eine Vergleichs-Gelfestigkeit von 791 g (Gelfestigkeit nach Beispiel 1 gemessen 1027 g/cm²), Löslichkeit jeweils 100%.

Dieser Vergleich zeigt, dass durch das Abtrennen von Salz auf einen niedrigen Salzgehalt gemäß der Erfindung mit anschließender Wärmebehandlung auch bei Messung der Gelfestigkeit gemäß dem Messverfahren der EP 3 571 935 A1 höhere Gelfestigkeiten erreicht werden.

Vergleichsversuch: Eiklarpulver aus Eiklar, das vor dem Trocknen einen höheren Salzgehalt aufweist:

Es hat sich gezeigt, dass eine Ultrafiltration, die nur einen Schritt aufweist, beendet wird, wenn der erforderliche Druck unpraktikabel hoch wird oder kein Wasser mit Salz mehr abgetrennt werden kann. Dies wird insbesondere auf den auf Retentatseite ansteigenden Proteingehalt zurückgeführt. Daher lässt sich mit einer solchen Ultrafiltration eine Verringerung des Salzgehalts um ca. 50% erreichen, z.B. auf ca. 1,7 Gew.-% in der Trockenmasse. Ein solches Eiklarpulver ist in Wasser löslich, während Eiklarpulver mit niedrigerem Salzgehalt von z.B. 1,3 Gew.-% und ohne die erfindungsgemäße Wärmebehandlung signifikant schlechter löslich ist und entsprechend Gele mit signifikant niedrigerer Gelstärke ausbildet.

**Patentansprüche**

1. Verfahren zur Herstellung von Eiklarpulver mit den Schritten

    a) Bereitstellen von flüssigem rohen Eiklar aus Vogeleiern durch Abtrennen von Eigelb vom Eiklar,
    b) optional Einstellen des pH-Werts des flüssigen Eiklars auf 4 bis 10
    c) optional Pasteurisieren des flüssigen rohen Eiklars,
    d) Abtrennen von Salz und Entzuckern des flüssigen Eiklars bis auf einen maximalen Salzgehalt an NaCl von maximal 1,4 Gew.-% an der Trockensubstanz zur Herstellung entsalzten und entzuckerten flüssigen Eiklars,
    e) optional Einstellen des pH-Werts des entsalzten und entzuckerten flüssigen Eiklars auf pH 4 bis 8,
    f) Sprühtrocknen des entsalzten und entzuckerten flüssigen Eiklars zur Herstellung von sprühgetrocknetem Eiklarpulver,
    g) Wärmebehandeln des sprühgetrockneten Eiklarpulvers bei einer Temperatur von 77°C bis 90°C für 1 bis 3 Wochen in Kontakt mit Luft und weiterem Trocknen des Eiklarpulvers bis zu einem Wassergehalt von maximal 6 Gew.-%.

2. Verfahren nach Anspruch 1, **dadurch gekennzeichnet, dass** in Schritt g) das Wärmebehandeln bei zumindest 77°C für zumindest 2 Wochen oder bei höherer Temperatur für 1 bis 3 Wochen erfolgt.

3. Verfahren nach einem der voranstehenden Ansprüche, **dadurch gekennzeichnet, dass** in Schritt d) das Abtrennen von Salz bis auf einen Salzgehalt von 1,3 bis 1,0 Gew.-% Trockenmasse erfolgt.

4. Verfahren nach einem der voranstehenden Ansprüche, **dadurch gekennzeichnet, dass** in Schritt d) das Abtrennen von Salz durch eine erste Ultrafiltration, anschließendes Zugeben von Wasser und eine zweite Ultrafiltration erfolgt.

**5.** Verfahren nach einem der voranstehenden Ansprüche, **dadurch gekennzeichnet, dass** in Schritt g) das Wärmebehandeln in Kontakt mit Luft und weiterem Trocknen des Eiklarpulvers bis zu einem Wassergehalt von maximal 4,6 Gew.-% erfolgt.

**6.** Verfahren nach einem der voranstehenden Ansprüche, **dadurch gekennzeichnet, dass** in Schritt b) der pH-Wert auf 4,0 bis 7,5 und/oder in Schritt e) der pH-Wert auf 4,0 bis 8,0 eingestellt wird.

**7.** Verfahren nach einem der voranstehenden Ansprüche, **dadurch gekennzeichnet, dass** das Abtrennen von Salz des flüssigen Eiklars bis auf einen Proteingehalt von zumindest 12 Gew.-% erfolgt.

**8.** Verfahren nach einem der voranstehenden Ansprüche, **dadurch gekennzeichnet, dass** das Abtrennen von Salz des flüssigen Eiklars bis auf einen Proteingehalt von 18 bis 23 Gew.-% erfolgt.

**9.** Verfahren nach einem der voranstehenden Ansprüche, **dadurch gekennzeichnet, dass** Sprühtrocknen bei 121 bis 232 °C erfolgt.

**10.** Verfahren nach einem der voranstehenden Ansprüche, **dadurch gekennzeichnet, dass** das Wärmebehandeln bei zumindest 77 °C für 3 Wochen oder bei 80 °C bis 90 °C für 1 bis 3 Wochen erfolgt.

**11.** Verfahren nach einem der voranstehenden Ansprüche, **dadurch gekennzeichnet, dass** beim Wärmebehandeln die mit dem Eiklarpulver in Kontakt stehende Luft ausgetauscht und/oder getrocknet wird.

**12.** Verfahren zur Herstellung eines Gels mit den Schritten zur Herstellung eines Eiklarpulvers nach Ansprüchen 1-11, **dadurch gekennzeichnet, dass** das Eiklarpulver nach der Wärmebehandlung mit Wasser gemischt und darin gelöst wird und auf zumindest eine Temperatur erwärmt wird, bei der das gelöste Eiklar denaturiert und ein Gel bildet.

**13.** Verfahren nach Anspruch 12, **dadurch gekennzeichnet, dass** das Wasser, in dem das Eiklarpulver gelöst wird, maximal 0,04 Gew.-% NaCl enthält oder zumindest 1 Gew.-% oder zumindest 2 Gew.-% NaCl enthält.

**14.** Eiklarpulver, erhalten nach einem Verfahren gemäß einem der voranstehenden Ansprüche 1-11 **dadurch gekennzeichnet, dass** es einen Salzgehalt an NaCl von maximal 1,4 Gew.-% an der Trockensubstanz und einen Wassergehalt von maximal 6 Gew.-% aufweist.

**15.** Eiklarpulver nach Anspruch 14, **dadurch gekennzeichnet, dass** es in destilliertem Wasser eine Löslichkeit von 100% aufweist und ein daraus durch Lösen von 15 Gew.-% in destilliertem Wasser mit anschließendem Erwärmen auf 75 °C hergestelltes Gel eine Wasserabgabe von maximal 6 Gew.-% und eine Gelfestigkeit von zumindest 490 g/cm$^2$ aufweist, wobei die Gelfestigkeit bestimmt wird als Bruchkraft in Bezug zur Stirnfläche des Messstempels (in g/cm$^2$) in einer Probe, die durch Mischen von 30 g Eiklarpulver werden mit 170 g bidest. Wasser und 2 h Stehenlassen, anschließend ohne eingeschlossene Luftblasen für 60 min auf 75 °C Erhitzen, Einfüllen der Mischung des Eiklarpulvers in Wasser ohne Einschluss von Luftblasen in einen Plastikschlauch und darin Erhitzen, anschließend 12h bei 2 bis 7 °C Kühlen und danach an der Luft auf Raumtemperatur Erwärmenlassen, und aus dem Gel Schneiden von 15 mm dicken Zylindern, Durchmesser 38,2 mm hergestellt ist, mit einem globularen Messstempel, 8 mm Durchmesser, Stirnfläche 1,005 cm$^2$, 1 mm/s Geschwindigkeit des Messstempels gegen das Gel, bis zum Erreichen einer Kompression der Probe von 90 %.

**Claims**

**1.** Process for the production of egg white powder comprising the steps

a) Providing liquid raw egg white from bird eggs by separating the yolk from the egg white,
b) optionally adjusting of the pH value of the liquid egg white to 4 to 10
c) optionally pasteurizing of the liquid raw egg white,
d) separating off salt and desugaring of the liquid egg white to a maximum salt content of NaCl of maximum 1.4 wt.-% of the dry substance for the production of desalted and desugared liquid egg white,
e) optionally adjusting of the pH value of the desalted and desugared liquid egg white to pH 4 to 8,
f) spray-drying the desalted and desugared liquid egg white for producing spray-dried egg white powder,
g) heat treating the spray-dried egg white powder at a temperature of 77°C to 90°C for 1 to 3 weeks in contact with air and further drying of the egg white powder to a maximum water content of at maximum 6 wt.-%.

2. Process according to claim 1, **characterized in that** in step g) the heat treatment is carried out at at least 77°C for at least 2 weeks or at a higher temperature for 1 to 3 weeks.

3. Process according to one of the preceding claims, **characterized in that** in step d) separating the salt is carried out to a salt content of 1.3 to 1.0 wt.-% of dry substance.

4. Process according to one of the preceding claims, **characterized in that** in step d) separating salt is carried out by a first ultrafiltration, subsequent addition of water and a second ultrafiltration.

5. Process according to one of the preceding claims, **characterized in that** in step g) the heat treatment is carried out in contact with air and further drying of the egg white powder to a maximum water content of 4.6 wt.-%.

6. Process according to one of the preceding claims, **characterized in that** in step b) the pH value is adjusted to 4.0 to 7.5 and/or in step e) the pH value is adjusted to 4.0 to 8.0.

7. Process according to one of the preceding claims, **characterized in that** separating the salt from the liquid egg white is carried out down to a protein content of at least 12 wt.-%.

8. Process according to one of the preceding claims, **characterized in that** separating the salt from the liquid egg white is carried out down to a protein content of 18 to 23 wt.-%.

9. Process according to one of the preceding claims, **characterized in that** spray drying is carried out at 121 to 232 °C.

10. Process according to one of the preceding claims, **characterized in that** the heat treatment is carried out at at least 77 °C for 3 weeks or at 80 °C to 90 °C for 1 to 3 weeks.

11. Process according to one of the preceding claims, **characterized in that** the air in contact with the egg white powder during the heat treatment is exchanged and/or dried.

12. Process for producing a gel with the steps for the production of an egg white powder according to one of claims 1-11, **characterized in that** after the heat treatment the egg white powder is mixed with and dissolved in water and is heated to at least a temperature at which the dissolved egg white denatures and forms a gel.

13. Process according to claim 12, **characterized in that** the water in which the egg white powder is dissolved contains a maximum of 0.04 wt.-% of NaCl or contains at least 1 wt.-% or at least 2 wt.-% of NaCl.

14. Egg white powder obtained by a process according to one of the claims 1-11, **characterized in that** it has a salt of content of NaCl of at maximum 1.4 wt.-% of the dry substance and a water content of at maximum 6 wt.-%.

15. Egg white powder according to claim 14, **characterized in that** it has a solubility of 100% in distilled water and a gel produced therefrom by dissolving 15 wt.-% in distilled water with subsequent heating to 75°C has a water release of at maximum 6 wt.% and a gel strength of at least 490 g/cm$^2$, the gel strength being determined as the breaking force in relation to the end face of the measuring stamp (in g/cm$^2$) in a sample prepared by mixing 30 g egg white powder with 170 g bidest. Water and allowing to stand for 2 h, then heating to 75 °C for 60 min without trapped air bubbles, pouring the mixture of egg white powder in water without trapping air bubbles into a plastic tube and heating in it, then cooling for 12 h at 2 to 7 °C and then allowing to warm to room temperature in the air, and from the gel cutting of 15 mm thick cylinders, diameter 38.2 mm, with a globular measuring plunger, 8 mm diameter, end face 1.005 cm$^2$, 1 mm/s speed of the measuring plunger against the gel, until a compression of the sample of 90 % is reached.

**Revendications**

1. Procédé de production de poudre de blanc d'oeuf comprenant les étapes suivantes

   a) préparation de blanc d'oeuf cru liquide à partir d'oeufs d'oiseaux en séparant le jaune d' oeuf du blanc d'oeuf,

b) en option, réglage du pH du blanc d'oeuf liquide entre 4 et 10

c) en option, pasteurisation du blanc d'oeuf cru liquide,

d) la séparation du sel et la désucrage du blanc d'oeuf liquide jusqu'à une teneur maximale en sel NaCl de 1,4 % en poids maximum de la substance sèche pour produire du blanc d'oeuf liquide dessalé et désucré,

e) en option, ajuster le pH du blanc d'oeuf liquide dessalé et désucré à un niveau compris entre 4 et 8,

f) séchage par atomisation du blanc d'oeuf liquide dessalé et désucré pour la production de poudre de blanc d'oeuf séchée par atomisation,

g) traitement thermique de la poudre de blanc d'oeuf séchée par pulvérisation à une température de 77°C à 90°C pendant 1 à 3 semaines en contact avec l'air et séchage supplémentaire de la poudre de blanc d'oeuf jusqu'à une teneur en eau de 6 % en poids au maximum.

2. Procédé selon la revendication 1, **caractérisé en ce que**, dans l'étape g), le traitement thermique est effectué à au moins 77°C pendant au moins 2 semaines ou à une température plus élevée pendant 1 à 3 semaines.

3. Procédé selon l'une quelconque des revendications précédentes, **caractérisé en ce que**, dans l'étape d), la séparation du sel est effectuée jusqu'à une teneur en sel de 1,3 à 1,0 % en poids de substance sèche.

4. Procédé selon l'une quelconque des revendications précédentes, **caractérisé en ce que**, à l'étape d), la séparation du sel est réalisée par une première ultrafiltration, suivie d'une addition d'eau et d'une deuxième ultrafiltration.

5. Procédé selon l'une quelconque des revendications précédentes, **caractérisé en ce que**, à l'étape g), on effectue le traitement thermique au contact de l'air et on poursuit le séchage de la poudre de blanc d'oeuf jusqu'à une teneur en eau maximale de 4,6 % en poids.

6. Procédé selon l'une des revendications précédentes, **caractérisé en ce que** dans l'étape b), le pH est ajusté entre 4,0 et 7,5 et/ou dans l'étape e), le pH est ajusté entre 4,0 et 8,0.

7. Procédé selon l'une quelconque des revendications précédentes, **caractérisé en ce que** la séparation du sel du blanc é liquide est effectuée jusqu'à une teneur en protéines d'au moins 12 % en poids.

8. Procédé selon l'une des revendications précédentes, **caractérisé en ce que** la séparation du sel du blanc d'oeuf liquide est effectuée jusqu'à une teneur en protéines de 18 à 23 % en poids.

9. Procédé selon l'une quelconque des revendications précédentes, **caractérisé en ce que** le séchage par pulvérisation est effectué à une température comprise entre 121 et 232 °C.

10. Procédé selon l'une quelconque des revendications précédentes, **caractérisé en ce que** le traitement thermique est effectué à au moins 77°C pendant 3 semaines ou à 80°C à 90°C pendant 1 à 3 semaines.

11. Procédé selon l'une des revendications précédentes, **caractérisé en ce que**, lors du traitement thermique, l'air en contact avec la poudre de blanc d'oeuf est échangé et/ou séché.

12. Procédé de production d'un gel avec les étaps du production d'un poudre de blanc d'oeuf selon l'une des revendications 1-11, **caractérisé en ce que** la poudre de blanc d'oeuf est mélangée et dissoute dans de l'eau après le traitement thermique et est chauffée à au moins une température à laquelle le blanc d'oeuf dissous est dénaturé et forme un gel.

13. Procédé selon la revendication 12, **caractérisé en ce que** l'eau dans laquelle la poudre de blanc d'oeuf est dissoute contient au maximum 0,04 % en poids de NaCl ou contient au moins 1 % en poids ou au moins 2 % en poids de NaCl.

14. Poudre de blanc d'oeuf obtenue par un procédé selon l'une des revendications 1-11, **caractérisée en ce qu'**elle présente une teneur en sel d'au maximum 1,4 % en poids de la substance sèche et une teneur en eau d'au maximum 6 % en poids.

15. Poudre de blanc d'oeuf selon la revendication 14, **caractérisée en ce qu'**elle présente une solubilité de 100% dans l'eau distillée et **en ce qu'**un gel préparé à partir de celle-ci par dissolution de 15% en poids dans de l'eau distillée suivie d'un chauffage à 75°C présente un dégagement d'eau d'au maximum 6% en poids et une résistance à l'écrasement d'au moins 490 g/cm$^2$, la résistance du gel étant déterminée comme étant la force de rupture par rapport à la surface frontale du poinçon de mesure (en g/cm$^2$) dans un échantillon obtenu en mélangeant 30 g de poudre de blanc d'oeuf avec 170 g de bidest. eau et laisser reposer pendant 2 h, puis chauffer à 75 °C pendant 60 min sans inclure de bulles d'air, verser le mélange de poudre de blanc d'oeuf dans l'eau sans inclure de bulles d'air dans un tube en plastique et y chauffer, puis refroidir pendant 12 h entre 2 et 7 °C, puis laisser chauffer à l'air jusqu'à la température ambiante, et en découpant dans le gel des cylindres de 15 mm d'épaisseur et de 38,2 mm de diamètre, à l'aide d'un poinçon de mesure globulaire de 8 mm de diamètre et d'une surface frontale de 1,005 cm$^2$, à une vitesse de 1 mm/s du poinçon de mesure contre le gel, jusqu'à obtenir une compression de 90 % de l'échantillon.

Fig. 1

60°C, 3 Wochen

Fig. 2

80°C, 3 Wochen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014206351 A1
- EP 3571935 A1
- WO 2017136119 A1

**In der Beschreibung aufgeführte Nicht-Patentliteratur**

- Egg Science and Technology. 1995, 180
- BARON et al. *Journal of Food Protection,* 2003, 825-832
- Egg Science and Biotechnology. 2008, 307-325